# EUROPÄISCHE PATENTSCHRIFT

(11) **EP 2 170 755 B1**
(45) Veröffentlichungstag und Bekanntmachung des Hinweises auf die Patenterteilung: **25.09.2019**
(21) Anmeldenummer: 08773941.3
(22) Anmeldetag: 10.07.2008
(51) Int. Cl.: B66C 13/22, B66F 9/07, B65G 1/04

(54) **TRANSPORTVORRICHTUNG ZUM TRANSPORTIEREN VON LASTEN ZU LAGERPLÄTZEN, INSBESONDERE IN EINEM HOCHREGALLAGER**
TRANSPORTING APPARATUS FOR TRANSPORTING LOADS TO STORAGE PLACES, IN PARTICULAR IN A HIGH-BAY WAREHOUSE
DISPOSITIF DE TRANSPORT DESTINÉ À TRANSPORTER DES CHARGES VERS DES ENTREPÔTS, EN PARTICULIER DANS UN ENTREPÔT À CHAMBRES TRÈS HAUTES

(30) Priorität: 21.07.2007 DE 102007034153
(43) Veröffentlichungstag der Anmeldung: 07.04.2010
(73) Patentinhaber: Westfalia Intralogistic GmbH, 33428 Harsewinkel (DE)
(72) Erfinder: KRAFT, Jürgen, 33330 Gütersloh (DE); KLEINEWIETFELD, Hubert, 33397 Rietberg (DE); RIEGAS, Georg, 28357 Bremen (DE)
(74) Vertreter: Wagner, Carsten
(86) Internationale Anmeldenummer: PCT/EP2008/005615
(87) Internationale Veröffentlichungsnummer: WO 2009/012890

(56) Entgegenhaltungen:
- WO-A-03/040019
- DE-A1- 2 449 805
- DE-A1- 2 553 221
- DE-A1- 10 122 142
- DE-U1- 20 108 207
- DE-U1- 20 203 604
- GB-A- 1 213 229
- GB-A- 1 242 155
- JP-A- 5 058 410
- US-A- 4 010 856
- US-A- 4 394 104

## Beschreibung

Die Erfindung betrifft eine Transportvorrichtung der im Oberbegriff des Anspruchs 1 genannten Art zum Transportieren von Lasten zu Lagerplätzen, insbesondere in einem Hochregallager.

Derartige Transportvorrichtungen sind allgemein bekannt und dienen dazu, Lasten, insbesondere Stückgüter, beispielsweise beladene Paletten, an Lagerplätzen einzulagern bzw. an den Lagerplätzen zur Auslagerung aufzunehmen.

Durch DE 202 03 604 U1 ist eine Transportvorrichtung der betreffenden Art zum Transportieren von Lasten zu Lagerplätzen eines Hochregallagers bekannt, die eine Krankatze und ein an der Krankatze aufgehängtes Lastaufnahmemittel aufweisen. Bei der aus der Druckschrift bekannten Transportvorrichtung ist das Lastaufnahmemittel an Seilen an der Krankatze aufgehängt, wobei der vertikale Abstand des Lastaufnahmemittels zu der Krankatze dadurch einstellbar ist, dass die Seile auf- oder abgerollt werden. Beim Transport von Lasten bewegt sich die Krankatze in einer Ebene, wobei sie beispielsweise und insbesondere an einem Führungssystem geführt werden kann, das an einer Decke einer Halle einer Lageranordnung, beispielsweise eines Hochregallagers, befestigt ist. Um eine Last an einem Lagerplatz einzulagern oder von einem Lagerplatz aufzunehmen, ist es erforderlich, das Lastaufnahmemittel sowohl in vertikaler als auch horizontaler Richtung relativ zu dem Lagerplatz, an dem die Last eingelagert bzw. aufgenommen werden soll, zu positionieren. Die horizontale Positionierung des Lastaufnahmemittels erfolgt dadurch, dass die Krankatze an ihrer Führungsanordnung entsprechend zweidimensional verfahren wird. Demgegenüber erfolgt die vertikale Positionierung dadurch, dass die Seile, an denen das Lastaufnahmemittel aufgehängt ist, entsprechend auf- oder abgerollt werden, so dass das Lastaufnahmemittel vertikal verfährt.

Während des Verfahrens der Krankatze führt das Lastaufnahmemittel aufgrund seiner pendelnden Aufhängung an den Seilen unerwünschte Pendelschwingungen aus. Durch DE 201 08 207 U1 (entsprechend DE 101 22 142 A1) ist es bekannt, die horizontale Auslenkung des Lastaufnahmemittels relativ zu der Krankatze zu ermitteln und ausgehend von der ermittelten Auslenkung die Verfahrgeschwindigkeit und Verfahrwege der Krankatze so zu wählen, dass die unerwünschten Pendelschwingungen minimiert sind.

Durch die zuvor bereits erwähnte DE 202 03 604 U1 ist es bekannt, dass Lastaufnahmemittel nach dem Erreichen einer gewünschten Position vor einem Lagerplatz an einem Teil der Lageranordnung, beispielsweise einem Regal eines Hochregallagers zu fixieren, um auf diese Weise unerwünschte Bewegungen des Lastaufnahmemittels relativ zu dem Lagerplatz zu vermeiden.

WO 03/040019 A offenbart eine Transportvorrichtung zum Transportieren von Lasten zu Lagerplätzen eines Hochregallagers, die eine Krankatze und ein an der Krankatze aufgehängt Lastaufnahmemittel aufweist.

Durch US 4 010 856 A ist eine Transportvorrichtung mit den Merkmalen des Oberbegriffs des Anspruchs 1 bekannt.

Der Erfindung liegt die Aufgabe zugrunde, eine Transportvorrichtung der im Oberbegriff des Anspruchs 1 genannten Art Art anzugeben, bei der der Transportvorgang zeitsparender gestaltet ist.

Diese Aufgabe wird eine Transportvorrichtung mit den Merkmalen des Anspruchs 1 gelöst.

Vorteilhafte und zweckmäßige Weiterbildungen der erfindungsgemäßen Transportvorrichtung sind in den abhängigen Ansprüchen angegeben.

Die Erfindung geht von der Erkenntnis aus, dass es mittels geeigneter Steuerungs- bzw. Regelungsalgorithmen möglich ist, Pendelschwingungen des Lastaufnahmemittels relativ zu der Krankatze während des Verfahrens der Krankatze zu minimieren, dass im Stillstand der Krankatze auftretende Rest-Pendelschwingungen des Lastaufnahmemittels jedoch erhebliche Zeitverzögerungen während des Einlagerungsvorganges verursachen. Dies deshalb, weil die Pendelschwingungen nahezu vollständig abgeklungen sein müssen, bevor mit dem Ablegen der Last an dem Lagerplatz bzw. dem Aufnehmen der Last von dem Lagerplatz begonnen werden kann. Andernfalls kann es zu einem ungenauen Ablegen von Lasten auf dem Lagerplatz sowie zu Betriebsstörungen und einer Beschädigung der Transportvorrichtung kommen.

Ausgehend von der Erkenntnis, dass sich die Rest-Pendelschwingungen bei Stillstand der Krankatze nicht mehr oder nur sehr schwierig ausregeln lassen, liegt der Erfindung die Erkenntnis zugrunde, dass sich der Einlagerungsvorgang dadurch wesentlich beschleunigen läßt, dass die Rest-Pendelschwingungen im Stillstand der Krankatze gedämpft werden. Die Erfindung sieht daher mechanische Dämpfungsmittel zur Dämpfung von Pendelschwingungen des Lastaufnahmemittels während des Stillstandes der Krankatze vor.

Bei einer erfindungsgemäßen Transportvorrichtung kann beispielsweise und insbesondere während des Verfahrens der Krankatze die horizontale Auslenkung des Lastaufnahmemittels relativ zu der Krankatze ermittelt und anhand geeigneter Steuerungs- oder Regelungsalgorithmen das Verfahren der Krankatze hinsichtlich Verfahrwegen und Verfahrgeschwindigkeit so gesteuert bzw. geregelt werden, dass die während des Verfahrens auftretenden Pendelschwingungen minimiert sind. Nach dem Erreichen der gewünschten Position vor einem Lagerplatz ist ein weiteres Ausregeln der Pendelschwingungen über den Verfahrweg der Krankatze ausgeschlossen, da sich die Krankatze bereits im Stillstand befindet. Erfindungsgemäß werden daher im Stillstand der Krankatze auftretende Pendelschwingungen durch mechanische Dämpfungsmittel gedämpft. Aufgrund der erfindungsgemäß vorgesehenen mechanischen Dämpfung gelangt das Lasteraufnahmemittel sehr viel schneller zum Stillstand als bei einer Transportvorrichtung gemäß dem Stand der Technik, so dass sehr viel schneller mit dem Ablegen einer Last auf dem Lagerplatz bzw. einem Aufnehmen der Last von dem Lagerplatz begonnen werden kann. Auf diese Weise ist die für einen Transportvorgang erforderliche Zeitdauer wesentlich verkürzt, insbesondere dann, wenn während eines Transportvorganges mehrere Positionierungsvorgänge des Lastaufnahmemittels erforderlich sind, beispielsweise dann, wenn eine Last mittels der Transportvorrichtung an einem Lagerplatz aufgenommen und an einem anderen Lagerplatz beispielsweise eines Hochregallagers abgelegt wird.

Damit wird die Lagerleistung einer mit einer erfindungsgemäßen Transportvorrichtung ausgestatteten Lageranordnung wesentlich erhöht.

Die erfindungsgemäß vorgesehenen mechanischen Dämpfungsmittel können erfindungsgemäß so ausgebildet sein, dass das Lastaufnahmemittel vollständig zum Stillstand gebracht wird, also keinerlei Pendelschwingungen mehr auftreten. Die Dämpfungsmittel können jedoch erfindungsgemäß auch so ausgebildet sein, dass nach erfindungsgemäßer Dämpfung nur noch Pendelschwingungen auftreten, die so gering sind, dass sie einen Ein- bzw. Auslagerungsvorgang nicht behindern.

Die erfindungsgemäße Transportvorrichtung ist in beliebigen Lageranordnungen einsetzbar. Besonders gut ist die erfindungsgemäße Transportvorrichtung in einem Hochregallager einsetzbar. Hierbei kann die Lageranordnung eine erfindungsgemäße Transportvorrichtung oder mehrere Transportvorrichtungen aufweisen, von denen wenigstens eine erfindungsgemäß ausgebildet ist.

Die Erfindung wird nachfolgend anhand der beigefügten Zeichnung näher erläutert, in der ein Ausführungsbeispiel einer erfindungsgemäßen Transportvorrichtung dargestellt ist.

Es zeigt:
- Fig. 1: eine Perspektivansicht zur Verdeutlichung des grundsätzlichen Aufbaus einer erfindungsgemäßen Transportvorrichtung,
- Fig. 2: eine Ansicht von oben auf die Transportvorrichtung gemäß Fig. 1,
- Fig. 3: eine Ansicht von oben auf ein Lastaufnahmemittel der Transportvorrichtung gemäß Fig. 2, wobei das Lastaufnahmemittel in einer Regalgasse eines Hochregallagers positioniert dargestellt ist,
- Fig. 4: eine Prinzipskizze zur Verdeutlichung der Funktionsweise eines ersten Ausführungsbeispieles von mechanischen Dämpfungsmitteln zur Dämpfung von Pendelschwingungen des Lastaufnahmemittels während des Stillstandes der Krankatze und
- Fig. 5: in perspektivischer Darstellung und größerem Maßstab eine Einzelheit aus Fig. 3 im Bereich der in Fig. 4 dargestellten mechanischen Dämpfungsmittel.

In den Figuren der Zeichnung sind gleiche bzw. sich entsprechende Bauteile mit den gleichen Bezugszeichen versehen.

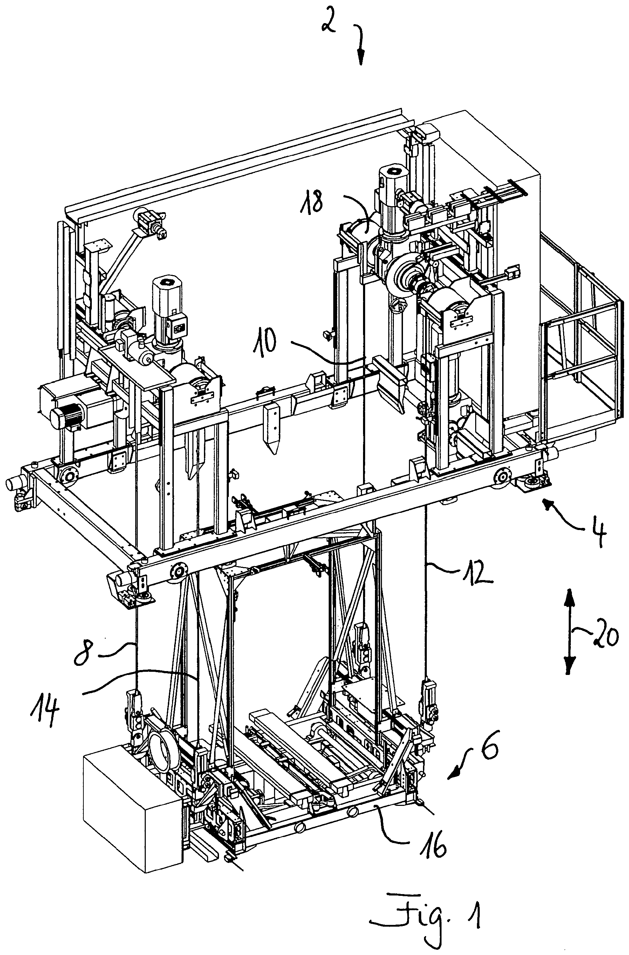

Fig. 1 verdeutlicht den grundsätzlichen Aufbau eines Ausführungsbeispieles einer erfindungsgemäßen Transportvorrichtung 2, die zum Transportieren von Lasten zu Lagerplätzen in einer in Fig. 1 nicht dargestellten Lageranordnung dient. Die Transportvorrichtung 2 weist eine Krankatze 4 auf, die zweidimensional in einer Ebene verfahrbar an einem Führungssystem angeordnet ist. Das Führungssystem kann beispielsweise an der Decke einer Halle befestigt sein, in der die Lageranordnung, die bei diesem Ausführungsbeispiel als Hochregallager ausgebildet ist, aufgestellt ist. Somit bewegt sich die Krankatze 4 zweidimensional unterhalb des Daches der Halle.

An der Krankatze 4 ist ein Lastaufnahmemittel 6 aufgehängt, wobei die Aufhängung bei diesem Ausführungsbeispiel durch vier Seile 8, 10, 12, 14 gebildet ist, die jeweils an Aufhängepunkten angreifen, die an den Ecken eines im wesentlichen rechteckförmigen Grundkörpers 16 des Lastaufnahmemittels 6 angeordnet sind. Jedem der Seile 8 bis 14 ist eine motorisch betriebene Aufwickelvorrichtung zugeordnet, von denen in Fig. 1 lediglich eine Aufwickelvorrichtung mit dem Bezugszeichen 18 versehen ist. Durch synchrones Aufwickeln der Seile 8, 14 mittels der Aufwickelvorrichtungen 18 ist somit der vertikale Abstand des Lastaufnahmemittels 6 von der Krankatze 4 verstellbar, wie in Fig. 1 durch einen Doppelpfeil 20 angedeutet.

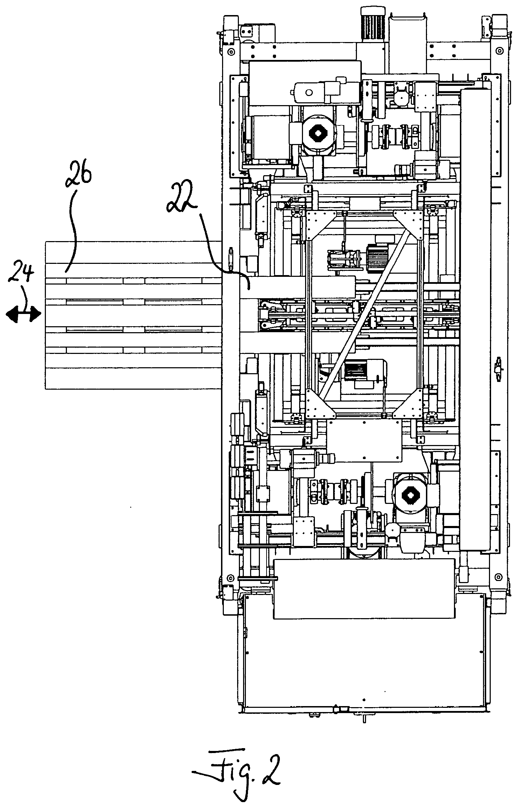

Fig. 2 zeigt eine Ansicht von oben der Transportvorrichtung 2, wobei erkennbar ist, dass das Lastaufnahmemittel 6 bei diesem Ausführungsbeispiel eine Gabelanordnung 22 aufweist, die in Richtung eines Doppelpfeiles 24 ein- bzw. ausfahrbar ist, um Lasten, beispielsweise eine in Fig. 2 dargestellte Palette 24, auf einem Lagerplatz abzustellen bzw. an dem Lagerplatz aufzunehmen und auf das Lastaufnahmemittel 6 zu bewegen. Der Aufbau einer entsprechenden Transportvorrichtung und ihrer Einzelteile, beispielsweise der Krankatze 4, das Lastaufnahmemittels 6 einschließlich der Gabelanordnung 22 sind dem Fachmann allgemein bekannt und werden daher hier nicht näher erläutert.

Beim Betrieb der Transportvorrichtung 2 wird beispielsweise an einem Übergabeplatz eine Palette 26 mittels der Gabelanordnung 22 aufgenommen und auf das Lastaufnahmemittel 6 bewegt. Sobald sich die Palette 26 auf dem Lastaufnahmemittel 6 befindet, wird das Lastaufnahmemittel 6 so verfahren, dass es sich in horizontaler und vertikaler Richtung vor einem Lagerplatz befindet, an dem die Palette 26 angelagert werden soll. Die Positionierung in horizontaler Richtung wird hierbei durch zweidimensionales Verfahren der Krankatze 4 und die vertikale Positionierung durch Verstellung des Abstandes zwischen der Krankatze 4 und dem Lastaufnahmemittel 6 erzielt.

Im Sinne einer möglichst schnellen Ein- bzw. Auslagerung und damit einer möglichst hohen Laserleistung des Lagers ist es wünschenswert, das Verfahren der Krankatze 4 sowie die Verstellung des Abstandes zwischen dem Lastaufnahmemittel 6 und der Krankatze 4 so schnell wie möglich zu vollziehen. Während dieser Vorgänge treten, insbesondere verursacht durch das Verfahren der Krankatze 4, unerwünschte Pendelschwingungen des Lastaufnahmemittels 6 relativ zu der Krankatze 4 auf, wobei durch eine geeignete Meßvorrichtung die horizontale Auslenkung des Lastaufnahmemittels 6 relativ zu der Krankatze 4 gemessen werden kann. Basierend auf der gemessenen Auslenkung, also der Amplitude der Pendelschwingung, können die Verfahrwege und die Verfahrgeschwindigkeit der Krankatze 4 dann so gesteuert oder geregelt werden, dass die Pendelschwingungen minimiert sind.

Ist das Lastaufnahmemittel 6 vor dem für die Ein- bzw. Auslagerung vorgesehenen Lagerplatz positioniert, so treten während des Stillstandes der Krankatze 4 weiterhin Rest-Pendelschwingungen des Lastaufnahmemittels auf.

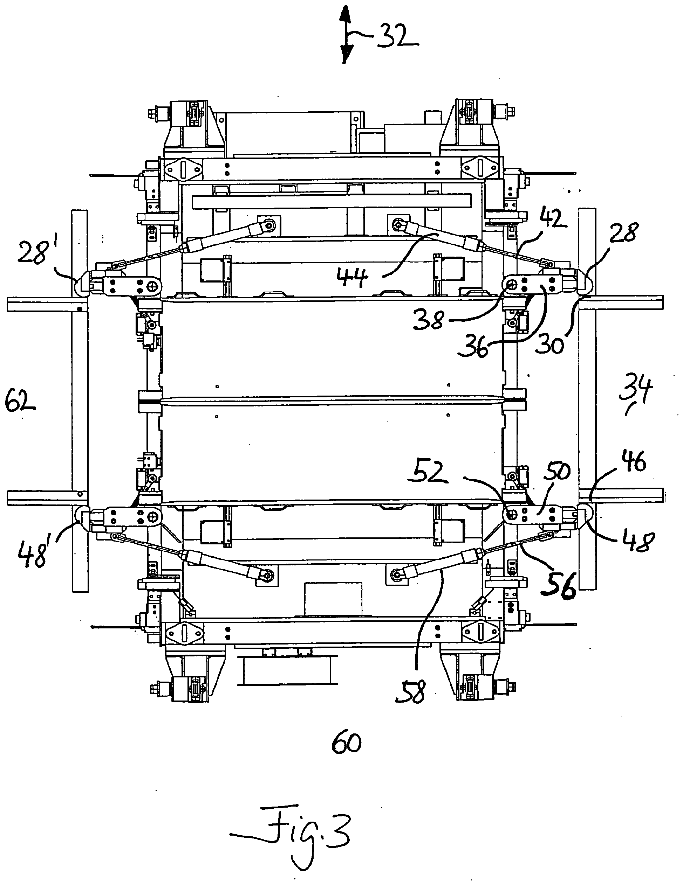

Fig. 3 zeigt eine Ansicht von oben auf das Lastaufnahmemittel 6, das mit einem ersten Ausführungsbeispiel von mechanischen Dämpfungsmitteln zur Dämpfung von Pendelschwingungen des Lastaufnahmemittels 6 während des Stillstandes der Krankatze 4 (Rest-Pendelschwingung) versehen ist. Die Dämpfungsmittel weisen bei diesem Ausführungsbeispiel ein als drehbare gelagerte Rolle 28 gebildetes Anlageteil auf, das in einer in Fig. 3 dargestellten Arbeitsposition an einem an dem Lagerplatz gebildeten ortsfesten Anschlag 30 zur Anlage gelangt. In Fig. 3 ist die Arbeitsposition des Anlageteiles 28 dargestellt, in der das Lastaufnahmemittel 6 stillsteht, also keinerlei Pendelschwingungen in Richtung eines Doppelpfeiles 32 ausführt, und so vor einem Lagerplatz 34 positioniert ist, dass eine Last an diesem Lagerplatz 34 abgelegt werden kann.

Das Anlageteil 28 ist bei diesem Ausführungsbeispiel über ein Halteteil mit dem Grundkörper 16 des Lastaufnahmemittels 16 verbunden und relativ zu dem Grundkörper zwischen einer Ruheposition, die weiter unten näher erläutert wird, und der in Fig. 3 dargestellten Arbeitsposition beweglich. Bei dem in Fig. 3 dargestellten Ausführungsbeispiel ist das Halteteil durch einen Schwenkhebel 36 gebildet, mittels dessen das Anlageteil 28 um eine im wesentlichen vertikale Schwenkachse 38 relativ zu dem Grundkörper 16 verschwenkbar ist. Dem Schwenkhebel 36 ist ein Schwenkantrieb in Form einer Kolben/Zylinderanordnung 40 zugeordnet, wobei das freie Ende des Kolbens 42 gelenkig mit dem Schwenkhebel 36 und das freie Ende des Zylinders 44 gelenkig mit dem Grundkörper 16 verbunden ist. Bei dem Zylinder 44 kann es sich beispielsweise um einen Hydraulikzylinder handeln.

Bei dem in Fig. 3 dargestellten Ausführungsbeispiel ist der Anschlag 30 Teil einer Anschlagsanordnung, die zusätzlich zu dem Anschlag 30 einen in Pendelrichtung 32 zu dem Anschlag beabstandeten weiteren Anschlag 46 aufweist. Dem Anschlag 46 ist ein weiteres Anlageteil 48 in Form einer drehbar gelagerten Rolle zugeordnet, das über einen Schwenkhebel 50 zwischen der in Fig. 3 dargestellten Arbeitsposition und einer Ruheposition relativ zu dem Grundkörper 16 verschwenkbar ist. Der Schwenkhebel 50 ist um eine im wesentlichen vertikale Schwenkachse 52 schwenkbar mit dem Grundkörper 16 verbunden, wobei zum Verschwenken des Schwenkhebels 50 eine Kolben/Zylinderanordnung 54 als Schwenkantrieb vorgesehen ist. Das freie Ende des Kolbens 56 ist gelenkig mit dem Schwenkhebel 50 verbunden, während das freie Ende des Zylinders 58 gelenkig mit dem Grundkörper 60 verbunden ist.

Die durch die Kolben/Zylinderanordnungen 40 bzw. 54 gebildeten Schwenkantriebe sind durch eine gemeinsame Steuerungseinrichtung in einer weiter unten näher beschriebenen Weise ansteuerbar.

Fig. 3 zeigt das Lastaufnahmemittel 6 in einer Regalgasse 60, in der sich auf der dem Lagerplatz 34 gegenüberliegenden Seite weitere Lagerplätze befinden, von denen in Fig. 3 lediglich ein weiterer Lagerplatz mit dem Bezugszeichen 62 versehen ist. Wie bei einem Hochregallager üblich, ist an durch Regalgassen 60 voneinander getrennten Regalen eine Vielzahl von übereinander und nebeneinander angeordneten Lagerplätzen gebildet.

Auf der dem Lagerplatz 62 zugewandten Seite weist das Lastaufnahmemittel 6 ein weiteres Anlageteil 28' sowie in Pendelrichtung 32 hierzu beabstandet ein weiteres Anlageteil 48' auf, die so ausgebildet sind, wie dies oben für die Anlageteile 48' bzw. 48 beschrieben worden ist. Die den weiteren Anlageteilen 28' bzw. 48' zugeordneten Bauteile entsprechen in ihrem Aufbau und ihrer zuvor beschriebenen und weiter unten näher erläuterten Funktion den den Anlageteilen 28, 48' zugeordneten Bauteilen und sind daher mit entsprechenden Bezugszeichen versehen. Nachfolgend wird lediglich die Funktionsweise der Anlageteile 28, 48 näher erläutert. Die Funktionsweise der Anlageteile 28', 48' ist entsprechend und wird daher nicht näher erläutert.

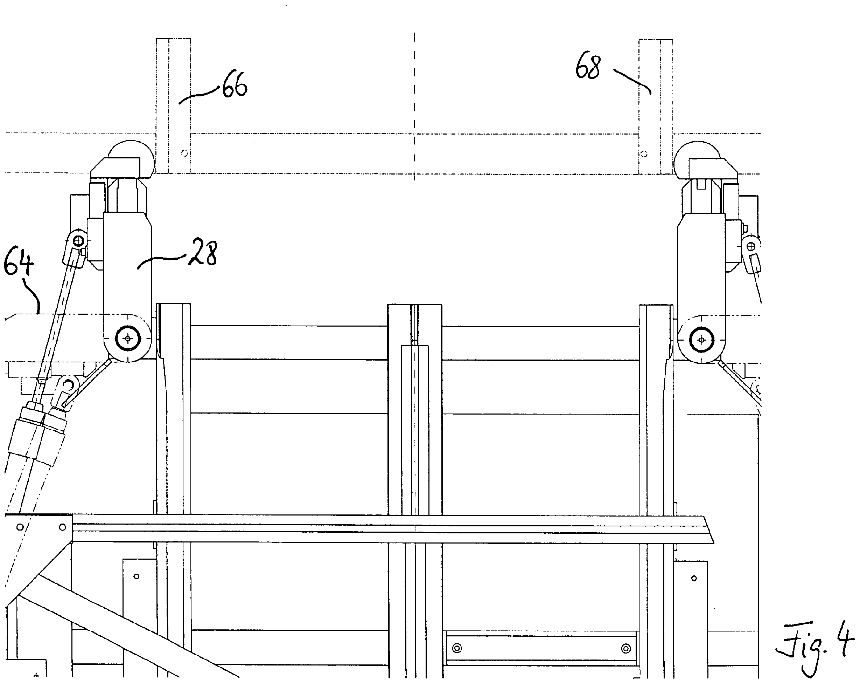

Fig. 4 zeigt eine Prinzipskizze zur Verdeutlichung der Funktion der Anlageteile 28, 48, wobei nachfolgend die Funktionsweise des Anlageteiles 28 näher beschrieben wird. Die Funktionsweise des Anlageteiles 48 ist entsprechend und wird daher nicht näher erläutert.

In einer Ruheposition, die in Fig. 4 durch eine gestrichelte Linie 64 angedeutet ist, befindet sich das Anlageteil 28 innerhalb der Begrenzungen des Lastaufnahmemittels 6. Während des Verfahrens der Krankatze 4, also während der Positionierung des Lastaufnahmemittels relativ zu der Lageranordnung, befindet sich das Anlageteil 28 in der in Fig. 4 dargestellten Ruheposition 64, so dass eine Kollision mit Teilen der Lageranordnung vermieden ist.

Ist durch entsprechendes Verfahren der Krankatze 4 und entsprechende Einstellung des vertikalen Abstandes zwischen der Krankatze 4 und dem Lastaufnahmemittel die gewünschte Position des Lastaufnahmemittels 6 relativ zu dem Lagerplatz 34 erreicht, so wird die Krankatze 4 stillgesetzt. Im Stillstand der Krankatze 4 führt das Lastaufnahmemittel 6 weiterhin Rest-Pendelschwingungen in Richtung des Doppelpfeiles 32 aus, die zwar eine geringe Amplitude haben, jedoch ausreichend sind, um ein sicheres Aufnehmen bzw. Abstellen von Paletten mittels der Gabelanordnung 22 zu verhindern.

Um diese Pendelschwingungen zu dämpfen, werden die Anlageteile 28, 48 mittels der zugeordneten Kolben/Zylinderanordnung 40 bzw. 54 so verschwenkt, dass sie die Anschläge 30, 46 der Anschlagsanordnung zangenartig einspannen, wie in Fig. 4 dargestellt. Hierbei werden die Kolben/Zylinderanordnungen 40, 54 durch eine gemeinsame Steuerungseinrichtung synchron so angesteuert, dass die Anlageteile 28, 48 synchron zueinander verschwenken. Hierbei besteht insbesondere die Möglichkeit, die lichte Weite zwischen den Anlageteilen 28, 48 in Pendelrichtung sukzessive zu verringern, so dass die Amplitude der Pendelschwingungen sukzessive bis auf Null verringert wird.

Die Steuerungseinrichtung kann hierbei insbesondere so ausgebildet sein, dass synchron zu den Anlageteilen 28, 48 auch die Anlageteile 28', 48' (vgl. Fig. 3) verschwenken.

Sind die Anlageteile 28, 48 so verschwenkt, dass sie spielfrei oder im wesentlichen spielfrei an den Anschlägen 30, 46 anliegen, so befindet sich das Lastaufnahmemittel 6 in Ruhe und ist vor dem Lagerplatz 34 zentriert. In dieser Position kann mittels der Gabelanordnung 22 eine Last auf dem Lagerplatz 34 eingelagert oder von diesem entnommen werden.

Die Anschläge 30, 46 können durch separate Bauteile gebildet sein. Bei dem in Fig. 4 dargestellten Ausführungsbeispiel sind sie durch die Außenflächen von in Längsrichtung des Lagerplatzes 34 verlaufenden Profilen 66, 68 gebildet.

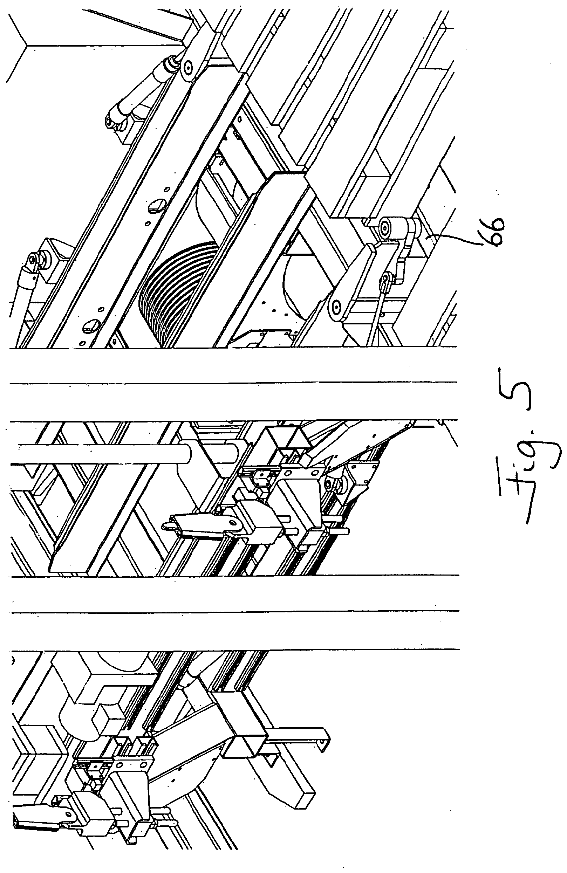

Fig. 5 zeigt eine Perspektivansicht des Lastaufnahmemittels in der Ruheposition, wobei erkennbar ist, dass das Anlageteil 48 an dem Anschlag 48 anliegt. Nach einer vollständigen Dämpfung der Rest-Pendelschwingungen, also beim Stillstand des Lastaufnahmemittels 6 kann das Lastaufnahmemittel 6 in Vertikalarichtung etwas abgesenkt werden, so dass sich das Anlageteil 28 mit seiner axialen Stirnfläche auf einem Querträger 66 des Lagerplatzes 34 abstützt. Entsprechendes gilt für die Anlagteile 28, 28' und 48'

Dadurch, dass Rest-Pendelschwingungen des Lastaufnahmemittels 6 gedämpft und das Lastaufnahmemittel vor dem Lagerplatz 34 exakt positioniert wird, kann mit einem Ein- bzw. Auslagerungsvorgang wesentlich schneller begonnen werden als ohne Dämpfung der Rest-Pendelschwingungen. Auf diese Weise ist die Lagerleistung eines mit einem Ausführungsbeispiel der erfindungsgemäßen Transportvorrichtung 2 ausgestatteten Hochregallagers wesentlich erhöht.

## Patentansprüche

1. Transportvorrichtung zum Transportieren von Lasten zu Lagerplätzen, insbesondere in einem Hochregallager,
mit einer Krankatze,
mit einem an der Krankatze aufgehängten Lastaufnahmemittel und
mit mechanischen Dämpfungsmitteln zur Dämpfung von Pendelschwingungen des Lastaufnahmemittels (6) während des Stillstandes der Krankatze (4),
wobei die Dämpfungsmittel wenigstens ein an dem Lastaufnahmemittel (6) angeordnetes erstes Teil und wenigstens ein an dem Lagerplatz (34) angeordnetes ortsfestes zweites Teil aufweisen, die zur Dämpfung von Pendelschwingungen zusammenwirken und beim Stillstand des Lastaufnahmemittels (6) vorzugsweise aneinander anliegen,
wobei das erste Teil ein Anlageteil (28) ist, das in einer Arbeitsposition an einem an dem Lagerplatz gebildeten ortsfesten Anschlag (30), der das zweite Teil bildet, zur Anlage gelangt,
**dadurch gekennzeichnet,**
**dass** das Anlageteil (28) über ein Halteteil mit einem Grundkörper (16) des Lastaufnahmemittels (6) verbunden und relativ zu dem Grundkörper (16) zwischen einer Ruheposition und der Arbeitsposition beweglich ist,
**dass** das Anlageteil (28) relativ zu dem Grundkörper (16) des Lastaufnahmemittels (6) um eine vertikale Schwenkachse (38) verschwenkbar ist,
**dass** das Halteteil ein Schwenkhebel (36) ist, dem ein Schwenkantrieb zugeordnet ist,
**dass** wenigstens zwei in Pendelrichtung zueinander beabstandete Anlageteile (28, 48) vorgesehen sind, denen jeweils ein Anschlag (30, 46) einer Anschlagsanordnung zugeordnet ist, und
**dass** die Anlageteile (28, 48) während des Verschwenkens in die Arbeitsposition die Anschläge (30, 46) der Anschlagsordnung zangenartig einspannen.

2. Transportvorrichtung nach Anspruch 1, **dadurch gekennzeichnet, dass** der Schwenkantrieb eine Kolben/Zylinderanordnung (40) aufweist.

3. Transportvorrichtung nach einem der vorhergehenden Ansprüche, **dadurch gekennzeichnet, dass** der Anschlag (30) in Pendelrichtung des Lastaufnahmemittels (6) wirkt.

4. Transportvorrichtung nach Anspruch 1, **gekennzeichnet durch** eine Steuerungsanordnung, **durch** die die den Halteteilen der Anlageteile (28, 48) zugeordneten Antriebseinrichtungen im wesentlichen synchron zueinander ansteuerbar sind, derart, dass die Anlageteile (28, 48) im wesentlichen synchron zueinander verschwenkbar sind.

5. Transportvorrichtung nach einem der vorhergehenden Ansprüche, **dadurch gekennzeichnet, dass** das Anlageteil (28) in Pendelrichtung beweglich an dem Halteteil gelagert und durch Federmittel in eine Nullage relativ zu dem Halteteil vorgespannt ist.

6. Transportvorrichtung nach einem der vorhergehenden Ansprüche, **dadurch gekennzeichnet, dass** das Anlageteil wenigstens eine drehbar gelagerte Rolle (74, 76) aufweist.

7. System zur Lagerung von Lasten, **dadurch gekennzeichnet, dass** es wenigstens eine Transportvorrichtung nach einem der vorhergehenden Ansprüche und wenigstens eine Lageranordnung, insbesondere ein Hochregallager, aufweist.

## Claims

1. Transport apparatus for transporting loads to storage places, in particular in a high-bay warehouse, comprising
a crane trolley,
a load picking means suspended on the crane trolley and
mechanical damping means for damping swinging motions of the load picking means (6) while the crane trolley (4) is not moving,
wherein the damping means comprise at least one first part arranged on the load picking means (6) and at least one stationary fixed second part arranged at the storage place (34) which cooperate with one another for damping swinging motions and preferably bear on one another when the load picking means (6) is not moving,
the first part is an installation part (28) which in a working position is positioned against a stationary fixed stop (30) formed at the storage place, which stop forms the second part,
**characterised in that**
the installation part (28) is connected by a holding part to a base body (16) of the load picking means (6) and is movable relative to the base body (16) between a position of rest and the working position,
the installation part (28) can be pivoted relative to the base body (16) of the load picking means (6) about a vertical pivot axis (38),
the holding part is a pivot lever (36) to which a pivot drive is allocated,
at least two installation parts (28, 48) spaced apart from one another in swinging direction are provided, to which a stop (30, 46) of a stop arrangement is assigned respectively and
the installation parts (28, 48) while pivoting into the working position clamp the stops (30, 46) of the stop arrangement in the manner of grippers.

2. Transport apparatus according to claim 1, **characterised in that** the pivot drive has a piston/cylinder arrangement (40).

3. Transport apparatus according to any of the preceding claims, **characterised in that** the stop (30) acts in the swinging direction of the load picking means (6).

4. Transport apparatus according to claim 1, **characterised by** a control arrangement, by means of which the drive devices assigned to the holding parts of the installation parts (28, 48) can be controlled substantially synchronously with one another such that the installation parts (28, 48) can be pivoted essentially synchronously with one another.

5. Transport apparatus according to any of the preceding claims, **characterised in that** the installation part (28) is mounted to be movable on the holding part in swinging direction and is pretensioned by spring-loaded means into a zero position relative to the holding part.

6. Transport apparatus according to any of the preceding claims, **characterised in that** the installation part comprises at least one rotatably mounted roller (74, 76).

7. System for storing loads, **characterised in that** it comprises at least one transport apparatus according to any of the preceding claims and at least one storage arrangement, in particular a high-bay warehouse.

## Revendications

1. Dispositif de transport pour le transport de charges vers des emplacements de stockage, plus particulièrement dans un magasin à rayonnages,
avec un chariot roulant,
avec un moyen de levage de charges suspendu au chariot roulant et
avec des moyens d'amortissement mécaniques pour l'amortissement des oscillations pendulaires du moyen de levage de charges (6) pendant l'immobilisation du chariot roulant (4),
les moyens d'amortissement comprenant au moins une première partie disposée sur le moyen de levage de charges (6) et au moins une deuxième partie fixe disposée au niveau de l'emplacement de stockage (34), qui interagissent pour l'amortissement des oscillations pendulaires et qui s'appuient l'un contre l'autre de préférence lors de l'immobilisation du moyen de levage de charges (6),
la première partie étant une partie d'appui (28) qui, dans une position de travail, arrive en appui contre une butée fixe (30) réalisée sur l'emplacement de stockage, qui constitué la deuxième partie,
**caractérisé en ce que**
la partie d'appui (28) est reliée par l'intermédiaire d'une partie de maintien avec un corps de base (16) du moyen de levage de charges (6) et est mobile par rapport au corps de base (16) entre une position de repos et la position de travail,
la partie d'appui (28) peut être pivotée par rapport au corps de base (16) du moyen de levage de charges (6) autour d'un axe de pivotement vertical (38),
la partie de maintien est un levier pivotant (36) auquel correspond un entraînement pivotant,
au moins deux parties d'appui (28, 48) écartées entre elles dans la direction d'oscillation, étant prévues, à chacune desquelles correspond une butée (30, 46) d'un dispositif de butée et
pendant le pivotement vers la position de travail, les parties d'appui (28, 48) serrent, à la manière d'une pince, les butées (30, 46) du dispositif de butée.

2. Dispositif de transport selon la revendication 1, **caractérisé en ce que** l'entraînement pivotant comprend un dispositif piston/cylindre (40).

3. Dispositif de transport selon l'une des revendications précédentes, **caractérisé en ce que** la butée (30) agit dans la direction d'oscillation du moyen de levage de charges (6).

4. Dispositif de transport selon la revendication 1, **caractérisé par** un dispositif de commande qui permet de contrôler les dispositifs d'entraînement correspondant aux parties de maintien des parties d'appui (28, 48) de manière globalement synchrone entre eux, de façon à ce que les parties d'appui (28, 48) puissent être pivotées de manière globalement synchrone entre elles.

5. Dispositif de transport selon l'une des revendications précédentes, **caractérisé en ce que** la partie d'appui (28) est logée de manière mobile dans la direction d'oscillation au niveau de la partie de maintien et est précontrainte par des moyens à ressorts dans une position zéro par rapport à la partie de maintien.

6. Dispositif de transport selon l'une des revendications précédentes, **caractérisé en ce que** la partie d'appui comprend au moins un rouleau (74, 76) logé de manière rotative.

7. Système pour le stockage de charges, **caractérisé en ce qu'**il comprend au moins un dispositif de transport selon l'une des revendications précédentes et au moins un dispositif de stockage, plus particulièrement un magasin à rayonnages.
